# EUROPÄISCHE PATENTSCHRIFT

(11) **EP 0 679 127 B1**
(45) Veröffentlichungstag und Bekanntmachung des Hinweises auf die Patenterteilung: **03.07.1996**
(21) Anmeldenummer: 93922948.0
(22) Anmeldetag: 13.10.1993
(51) Int. Cl.: B60M 1/20, B60M 1/225, H02G 7/08

(54) **VORRICHTUNG ZUM AUFHÄNGEN WENIGSTENS EINES STROMFÜHRENDEN FAHRDRAHTES FÜR STROMABNEHMER VON OBERLEITUNGSBUSSEN ODER STRASSENBAHNEN**
SUSPENSION DEVICE FOR AT LEAST ONE LIVE CONTACT WIRE FOR CURRENT COLLECTORS OF OVERHEAD-WIRE BUSES OR STREETCARS
DISPOSITIF POUR SUSPENDRE AU MOINS UN CONDUCTEUR AERIEN POUR LES BALAIS CONDUCTEURS DE TROLLEY-BUS OU DE TRAMWAYS

(30) Priorität: 15.10.1992 DE 4234755
(43) Veröffentlichungstag der Anmeldung: 02.11.1995
(73) Patentinhaber: Kummler+Matter AG, CH-8026 Zürich (CH)
(72) Erfinder: STEINER, Daniel, CH-5525 Fischbach (CH); BRASSEL, Willy, CH-5605 Dottikon (CH); HAGMANN, Karl, CH-8048 ZÜRICH (CH)
(74) Vertreter: Hiebsch, Gerhard F., Dipl.-Ing.
(86) Internationale Anmeldenummer: EP9302818
(87) Internationale Veröffentlichungsnummer: WO9408816

(56) Entgegenhaltungen:
- FR-A- 1 132 594
- FR-A- 2 564 647
- US-A- 2 356 052

## Beschreibung

Die Erfindung betrifft eine Vorrichtung zum Aufhängen wenigstens eines stromführenden Fahrdrahtes für Stromabnehmer von Oberleitungsbussen oder Straßenbahnen nach den Oberbegriffen der unabhängigen Patentansprüche.

Ein an zwei in Abstand zueinander den Fahrweg des -- auch Trolleybus genannten -- Oberleitungsbusses, der Straßenbahn od.dgl. Fahrzeugs querenden Tragseilen punktartig aufgehängter Fahrdraht bildet i.a. eine Kettenlinie. Sie verläuft in der Mitte der beiden Stützpunkte horizontal und steigt zu den Aufhängepunkten hin steiler werdend an. Diese Lage des Fahrdrahtes ist abhängig von seiner spezifischen Zugspannung und der Entfernung der beiden Aufhängungen.

Wird der Fahrdraht durch einen Trolleybus-Stromabnehmer oder Pantographen schleifend berührt, so drückt der Anpreßdruck dieses Schleifkontaktes den Fahrdraht aus der Ruhelage nach oben in die sog. Arbeitslage. Die Höhendifferenz zwischen Ruhelage und Arbeitslage ist in der Mitte der Spannweite am größten, am Stützpunkt am kleinsten, und sie ist abhängig von dem Anpreßdruck des Schleifkontaktes, der Spannweite, der spezifischen Zugspannung des Fahrdrahtes, dessen Querschnitt sowie von der Geschwindigkeit des Fahrzeugs bzw. Schleifkontaktes.

Die Kurve der Arbeitslage entspricht im wesentlichen der Ruhelage, d.h. sie ist in der Mitte der Spannweite horizontal und am Stützpunkt am steilsten.

Gleitet nun der Schleifkontakt entlang der Arbeitslinie, so hat er anfangs noch einen beinahe horizontalen Verlauf. Entsprechend der steiler werdenden Fahrdrahtkurve muß dann der Schleifkontakt immer mehr nach oben beschleunigt werden. Diese Beschleunigungsfähigkeit des Stromabnehmers hat aber auf Grund der Massenträgheit und des Anpreßdruckes eine Grenze. Der Schleifkontakt kann bei höheren Geschwindigkeiten der immer steiler werdenden Fahrdrahtkurve nicht mehr folgen, löst sich vor dem Stützpunkt vom Fahrdraht ab, überspringt den Stützpunkt und prallt hinter ihm auf den Fahrdraht der nächsten Spannweite. Diese Sprungbrettwirkung bei starr aufgehängten Fahrdrähten ist an Funken kurz vor und nach dem Aufhängepunkt leicht festzustellen.

Begünstigt wird dieses Abspringen noch durch eine Fahrdrahtwelle, welche der Stromabnehmer vor sich herschiebt. Diese wird am festen Aufhängepunkt reflektiert und begünstigt das Abschleudern des Stromabnehmers nach unten. Das Abspringen erzeugt neben Radiostörungen Schweißperlen vor allem an der Aufprallstelle und führt außerdem noch zu einer erhöhten mechanischen Abnützung des Fahrdrahtes. Die Schweißperlen haben wiederum eine zerstörende Auswirkung auf den Schleifkontakt.

Die US-A- 2 356 052 beschreibt eine eingangs erwähnte Vorrichtung mit an einem Tragseil od. dgl. strangförmigen Tragelement festlegbarer Klemmeinrichtung als Verbindungselement sowie mit einem gegen das Tragseil isolierten Greiforgan in Form von Klemmbacken für den Fahrdraht; das Verbindungselement weist einen quaderartigen Tragschuh mit einem seitlichen Schlitz als Aufnahme für ein beweglich eingelegtes pilzkopfähnliches Lagerteil eines Tragkörpers in Form einer Schüssel mit Isoliereinlage auf. Das Lagerteil durchgreift den Schlitz und sitzt diesen umgebenden Flächen so auf, daß es um eine vertikale Achse drehbar scheint. Zwischen einem mit dem Tragschuh verschraubbaren Klemmdeckel und dem Tragschuh selbst ist in einer Längsnut das Tragseil rutschfest festlegbar.

Die vorstehenden Probleme wurden durch eine elastische Aufhängung weitgehend gemildert. Solche gattungsbildende Vorrichtungen mit keramischem Isolierkörper zwischen das Tragseil umfangenden Klemmen und einer parallelogrammartigen Hängeeinrichtung beschreibt die CH-A-207 177 als Zusatz zur CH-A-195 513 der Anmelderin. Diese bekannte Hängeeinrichtung besteht aus einem Paar von Hängesträngen sowie zwei durch diese verbundenen jochartigen Querelementen, deren eines Klemmen für den Fahrdraht anbietet. Das seilnahe Joch ist an den Isolierkörper starr angeschlossen. Der in einer glockenähnlichen Metallhaube mit seitlichen Laschen lagernde Isolierkörper, von dem nach unten hin ein Schraubbolzen abragt, ist auch der CH-A-186 137 zu entnehmen. Außerdem offenbart die CH-A-229 346 einen mit jenem Isolierkörper ausgestatteten Pendelkurvenhalter, bei dem an die Metallhaube des Isolierkörpers ein endwärts auf das Tragseil drückender Auslegerarm anschließt.

Wird die Fahrleitung entsprechend der erwähnten CH-A 195 513 entlang einer geraden Achse im Zickzack verlegt (max. Fahrdrahtwinkel in der Geraden 2 1/2°), so erhält man im Aufhängepunkt zwei Kraftkomponenten. Die eine ist das -- von der Spannweite abhängige -- Gewicht des Fahrdrahtes, die andere der Kurvenzug, abhängig vom Fahrdrahtwinkel und Zugspannung im Fahrdraht. Hängt man nun am Stützpunkt den Fahrdraht bzw. die Fahrleitung mittels eines Pendels auf, so wird es entsprechend diesen beiden Komponenten eine gewisse Schieflage einnehmen.

Ändert der Anpreßdruck des Schleifkontaktes die senkrechte Komponente auch nur um einen geringen Betrag, wird auch sofort die Pendelneigung -- und damit auch die Höhe des Fahrdrahtes im Aufhängepunkt -- geändert.

Bewegt sich der Schleifkontakt auf den Stützpunkt zu, so übernimmt der Anpreßdruck des Stromabnehmers bei Annäherung an den Stützpunkt zunehmend einen Teil des Fahrdrahtgewichtes, d.h. die senkrechte Gewichtskomponente am Pendel verkleinert sich, das Pendel stellt sich flacher ein und der Fahrdraht wird am Stützpunkt von der unteren Ruhelage in die obere Arbeitslage gehoben. Der Schleifkontakt kommt nun ganz in die Nähe des Stützpunktes, wo der Fahrdraht am steilsten ansteigt. Um am Fahrdraht zu bleiben, müßte der Stromabnehmer sehr stark nach oben beschleunigen, was bei größeren Geschwindigkeiten auf Grund seiner Massenträgheit nicht möglich ist. Bei einer starren Fahrleitung würde nun die schon beschriebene Sprungbrettwirkung eintreten.

Würde nun aber hier der Schleifkontakt vom Fahrdraht abspringen, so müßte natürlich der Anpreßdruck vorher bis auf Null sinken. In einem solchen Fall würde am Pendel sofort die senkrechte Komponente wieder größer, d.h. das Pendel wird steiler und der Aufhängepunkt sinkt. Kann also der Schleifkontakt die Fahrdrahtsteigerung vor dem Stützpunkt nicht mehr bewältigen, kommt der Aufhängepunkt mit dem Fahrdraht, der zuerst nach oben gedrückt wurde, dem Schleifkontakt nach unten entgegen und die Kontaktnahme ist gewährleistet.

Hat der Schleifkontakt den Stützpunkt passiert, so prallt er entsprechend seiner Masse und Geschwindigkeit mit einer gewissen Wucht auf den Fahrdraht der nächsten Spannweite. Diese horizontale Kraft teilt sich in zwei Komponenten. Die eine ist tangential zum Fahrdraht gerichtet und daher unschädlich; die andere zeigt nach oben senkrecht zum Fahrdraht und bewirkt bei starr aufgehängtem Fahrdraht hinter dem Aufhängepunkt einen starken Verschleiß desselben.

Bei der elastisch aufgehängten Fahrleitung führt jedoch diese nach oben gerichtete Kraftkomponente zu einer Verminderung der senkrechten Komponente des Pendels, infolgedessen stellt sich das Pendel flacher, der Aufhängepunkt hebt sich und der Fahrdraht fängt somit den Aufprall des Schleifkontaktes elastisch ab. Dies aber ist nur bei einer Fahrdrahtaufhängung mittel Schrägpendels möglich; würden die Pendel senkrecht stehen, müßte der Anpreßdruck des Stromabnehmers erst das gesamte Fahrdrahtgewicht einer Spannweite überwinden, bevor sich der Aufhängepunkt hebt bzw. elastisch wird. Durch den Anpreßdruck des Schleifkontaktes und durch das seitliche Abschwenken des Trolleybusses wird die Fahrleitung in Schwingungen versetzt.

Die Überlegenheit der elastischen Fahrdrahtaufhängung gegenüber der starren besteht im Auf- und Abschwingen der pendelnden Stützpunkte in Abhängigkeit vom Anpreßdruck. Es muß deshalb mittels eines Drahtparallelogramms dafür gesorgt werden, daß der Fahrdraht in jeder Pendellage senkrecht steht.

Die genannte Zickzackführung des Fahrdrahtes hat auf die Stromabnahme keinen nachteiligen Einfluß, da die auftretenden geringen Kräfte durch die Seitenbeschleunigung des Stromabnehmers am Stützpunkt ohne weiteres vom Pendel ausgeglichen werden. Zudem wird durch diese Zickzackführung in Verbindung mit den Schrägpendeln eine teilweise Kompensation der thermisch bedingten Zugspannungsänderung des Fahrdrahtes erreicht. Dieser Effekt stellt sich dadurch ein, daß bei verschiedenen Temperaturen sich sowohl die Schieflage der Pendel als auch der Fahrdrahtwinkel am Stützpunkt ändert - und damit die Entfernung von Aufhängepunkt zu Aufhängepunkt.

Die erörterten sog. Schrägpendel bieten die folgenden Vorteile an:
- gleichmäßiger Anpreßdruck des Stromabnehmers infolge Nachgiebigkeit des Fahrdrahtes in den Aufhängepunkten;
- hohe Betriebssicherheit, geringe Entgleisungsgefahr;
- Radiostörfreiheit;
- hohe Lebensdauer der Kohleschleifstücke des Stromabnehmers, ohne daß die Fahrdrähte geschmiert werden müssen;
- nahezu keine Abnützung des Fahrdrahtes; lange Lebensdauer, Einsparung von Kupfer;
- teilweise Kompensation der thermischen Dehnung des Fahrdrahtes; d.h. der Zugspannungsdifferenz;
- Nutzbarkeit maximaler Spannweiten bis zu 35 m in den Geraden und damit geringer Bedarf an Leitungsmasten;
- geringere Unterhaltskosten, deshalb wirtschaftlicher Betrieb;
- Ermöglichung höchster Fahrgeschwindigkeiten, besonders auch in Kurven, und Steigerung der Wirtschaftlichkeit des Betriebes durch höhere Reisegeschwindigkeit.

Den Vorzügen der pendelnden Aufhängung steht als Nachteil gegenüber, daß die bekannten Pendelaufhängungen im Bereich ihrer keramischen Isolierkörper verschleißanfällig sind; letztere sind gegen von außen einwirkende Kräfte sehr empfindlich.

In Kenntnis dieser Gegebenheiten hat sich der Erfinder das Ziel gesetzt, eine Vorrichtung der eingangs genannten Art unter Meidung der erkannten Mängel zu verbessern und vor allem die Standdauer der Pendelaufhängung zu erhöhen. Diese neuartigen Aufhängungen sollen insbesondere für Fahrleitungen von Oberleitungsbussen oder Straßenbahnen geeignet sein, gegebenenfalls aber auch für die Fahrdrähte anderer Verkehrsmittel.

Zur Lösung dieser Aufgabe führt die Lehre nach den unabhängigen Patentansprüchen; die Unteransprüche geben besonders günstige Weiterbildungen wieder.

Erfindungsgemäß ist das Verbindungselement aus einem isolierenden Kunststoff geformt -- gegebenenfalls auch aus einem mit dem Kunststoff ummantelten Metall --, und der Tragschuh weist als Aufnahme ein Anschlußauge für das Lagerteil auf, das den Tragschuh quer zum Tragseil mit einem Achsstift -- oder einem entsprechenden Teil --durchgreift. Es wird also statt des anfälligen Keramikisolators im Metallgehäuse als Zwischenglied nunmehr insgesamt ein Formkörper -- bevorzugt aus einem Polyamid mit Glasfaserverstärkung -- eingesetzt, der drei Funktionen übernimmt, nämlich zum einen die Aufgabe der Isolierung sowie zum anderen gleichzeitig das rutschfeste Festlegen einerseits und die gelenkartige Verbindung mit den eigentlichen Aufhängteilen anderseits.

Ein für Pendelkurvenhalter gedachtes weiteres Ausführungsbeispiel der Vorrichtung weist als Tragschuh ein lineares Klemmhaupt mit Klemmschellen als Klemmdeckel für das dazwischen einklemmbare Tragseil auf; an das Klemmhaupt ist in Längsrichtung außermittig ein freier Arm mit wenigstens einem Anschlußauge als Aufnahme für das Lagerteil des Tragelements angeformt, welches um einen den Arm und das Lagerteil durchsetzenden Querbolzen od. dgl. Achsstift parallel zum Arm drehbar und durch Anziehen des Querbolzens feststellbar ist; das Verbindungslement ist aus einem isolierenden Kunststoff geformt und das Klemmhaupt durch einen Auslegerabschnitt parallel zum Tragseil seitlich verlängert, wobei letzterer als Klemmteil für das Tragseil ausgebildet ist.

Schließlich liegt im Rahmen der Erfindung eine andere Ausgestaltung der Vorrichtung, bei der die aus der CH-A-207 177 bekannte parallelogrammartige Hängeeinrichtung mit den durch ein Paar von Hängesträngen verbundenen jochartigen Querelementen derart weitergebildet werden soll, daß ihr Verbindungselement einen Tragschuh mit einem Anschlußauge als Aufnahme für ein darin festlegbares Lagerteil des Querelements als Gelenkstelle und einen mit dem Tragschuh verschraubbaren Klemmdeckel aufweist, zwischen welchem und dem Tragschuh in einer Längsnut das Tragseil rutschfest festlegbar ist; das Verbindungselement ist auch hier aus einem isolierenden Kunststoff geformt und bildet einen einheitlichen Formkörer, der das Anschlußauge als Aufnahme für das ihm gegenüber verstellbare Querelement für das Greiforgan aufweist. Zu dieser Ausgestaltung hat es sich als günstig erwiesen, das Verbindungselement als ein lineares Klemmhaupt mit Klemmschellen als Klemmdeckel für das dazwischen einklemmbare Tragseil zu konzipieren sowie an das Klemmhaupt in Längsrichtung außermittig einen freien Arm mit wenigstens einem Anschlußauge als Aufnahme für das Lagerteil des Tragelements anzuformen, welches um den --Arm und Lagerteil durchsetzenden -- Querbolzen od.dgl. Achsstift parallel zum Arm drehbar feststellbar ist. Dieses Verbindungselement besteht aus einem isolierernden Kunststoff, und das Klemmhaupt ist durch einen Auslegerabschnitt parallel zum Tragseil seitlich verlängert sowie dieser als Klemmteil für das Tragseil ausgebildet.

Ein zapfenartiges Organ des dem Tragseil naheliegenden Querelements -- jenes Jochstabes -- kann in das Anschlußauge des Verbindungselementes, also des Tragschuhs oder des Klemmhauptes, eingesetzt und durch eine Stellschraube oder eine entsprechende Stelleinrichtung festgelegt werden. Durch diese Maßgabe wird auf einfache Weise die Lage dieses die Hängestränge des Parallelogramms oder aber einzelne Aufhängestäbe tragenden Jochstabes gegenüber dem dem das Anschlußauge anbietenden Verbindungselement -- und damit gegenüber dem Tragseil --eingestellt und fixiert. Das Lösen der Stellschraube ermöglicht jederzeit eine neue Justierung der Aufhängung.

Eine besonders feine Einstellung wird dadurch erreicht, daß am Klemmhaupt bzw. dessen freien Arm -- und in Abstand zu der von Anschlußauge und zapfenartigem Organ gebildeten Gelenkstelle -- eine Justierschraube lagert, die einstellbar gegen einen Anschlag des Jochstabes zu drücken vermag. Selbstverständlich kann diese Justierschraube am Jochstab sitzen und der Anschlag am Klemmhaupt.

Insbesondere beim Jochstab des Pendelkurvenhalters hat es sich als günstig erwiesen, das Tragelement -- waagearmartig - - mit zwei hakenförmigen freien Enden zur Aufnahme der Enden der Hängestränge auszustatten. Bei der Hängeeinrichtung nach CH-PS 207 177 sind diese Hängestränge unmittelbar durch Ösen des dortigen Aufhängebügels geführt und dann zu Strangösen verarbeitet. Die Vereinfachung der Montage durch die Erfindung wird offensichtlich.

Insbesondere für diese hakenartigen Enden, aber auch für anders gestaltete Halteaugen der Jochstäbe sind erfindungsgemäße rohrförmige Eckverbinder aus Metall, insbesondere Leichtmetall, besonders geeignet, die an jedem Ende eines Stranges aus Isolierwerkstoff sitzen, wobei der Eckverbinder einen Gelenkbolzen als Anschlußorgan aufweist.

Selbstverständlich können auch andere Hülsenformen oder gar Kauschen hier eingesetzt werden.

Nach weiteren Ausgestaltungen ist die Gelenkstelle zwischen Tragschuh bzw. Klemmhaupt und Jochstab mit einem Einsatz aus gegenüber dem Verbindungselement härterem Werkstoff, bevorzugt aus Metall, ausgestattet; dieser Einsatz ist in den Tragschuh oder den Arm des Klemmhauptes eingegossen. Durch einen polygonen Abschnitt im Bereich des Tragschuhes oder des Armes ist der Einsatz drehgesichert oder aber durch wenigstens eine Retention, bevorzugt einen Segmentabschnitt.

Günstigerweise verjüngt sich die quer zur Hängerichtung verlaufende Ausnehmung des Einsatzes nach innen hin konisch bis zu einer Zylinderbohrung als Fortsetzung für eine zur Führung der Stellschraube für die Gelenkstelle. Diese Ausnehmung ist in Hängerichtung -- also nach unten weisend -- offen und erweitert sich abwärts.

Die in die Ausnehmung einzusetzende Ausformung des Jochstabes ist ein Konuszapfen, der von der Stellschraube durchgriffen wird, also eine zentrische Öffnung anbietet. Dieser Konuszapfen ist Formteil des Jochstabes mit radial vorn Konuszapfen abragenden gekröpften Armen, die in Ösen als Halteaugen enden.

Bei einer günstigen Ausführung ist der Konuszapfen Teil eines querschnittlich U-förmigen Tragstückes, das mit einem Arm den Tragschuh etwa mittig untergreift; dieser Arm trägt dann einen abwärts gerichteten Gewindestift od.dgl. Anschlußorgan.

Eine andere Ausgestaltung erfaßt ein bolzenartiges Anschlußelement, das in die untere Öffnung der konischen Ausnehmung einführbar und durch die Stellschraube zu fixieren ist.

Auch kann man am Tragschuh oder Klemmhalter ein Hängegeschirr anbringen; beispielsweise ist der Tragschuh bei einer Bauart im Bereich des Einsatzes von laschenartigen Verbindungselementen eines Halters abgedeckt, der das Hängegeschirr trägt.

Besonders günstig hat es sich erwiesen, das Hängegeschirr am Tragschuh zumindest um eine Achse drehbar auszuführen. Dieses Hängegeschirr vermag nach einem weiteren Merkmal der Erfindung eine quer zum Tragseil verlaufende Stellschiene für Klemmeinrichtungen zu tragen, in denen jeweils eine Fahrleitung verklammert zu werden vermag. In ähnlicher Art können etwa bei einer Feederausführung zwei Fahrleitungen --Drahtseile od.dgl. Stränge -- an einem Querhaupt des Hängegeschirrs angebracht werden und zwar an zwei Klemmstellen.

Vorteilhafteweise ist ein Tragschuh mit Klemmdeckel für übliche Pendelaufhängungen vorgesehen sowie ein Klemmhalter mit Ausleger und außermittigen Arm vor allem für Pendelkurvenhalter. Beide Ausgestaltungen sind aus dem beschriebenen isolierenden und belastbaren Kunststoff geformt - beide als sehr flache Körper, deren Breite bevorzugt unter 50 mm liegt.

Zum Tragschuh sei noch hervorgehoben, daß er beidseits einer -- die Achse der konischen Ausnehmung querenden Symmetriegeraden jeweils einen flügelähnlichen Abschnitt besitzt und beide die Oberseite zur Anlage an ein Tragseil anbieten; auf diese Oberseite wird ein Klemmdeckel aufgeschraubt und so das Tragseil rutschfest gehalten. Der besseren Anpassung wegen ist die Oberseite zu ihren Endkanten hin abwärts gekrümmt,

Es entsteht dank der Erfindung eine strapazierfähige und dennoch einfach montierbare Verbindung zwischen dem Tragseil und der Fahrleitung mit dem besonderen Vorzug, daß durch i.w. zwei Ausführungen des Klemmhalters die gesamte Einsatzbreite der Befestigungsmöglichkeiten für oberhalb öffentlicher Verkehrswege verlaufender stromführender Oberleitungen abgedeckt werden kann.

Weitere Vorteile und Einzelheiten der Erfindung ergeben sich aus der nachfolgenden Beschreibung bevorzugter Ausführungsbeispiele sowie anhand der Zeichnung; diese zeigt in:
- Fig. 1:: die Seitenansicht einer -- einen Klemmhalter mit Tragschuh und Klemmdeckel sowie mit einem Jochstab aufweisenden --Pendelaufhängung für einen Fahrdraht von Oberleitungsbussen od.dgl. Fahrzeugen;
- Fig. 2:: einen Ausschnitt aus einer Fahrdrahtstrecke mit zwei gegenläufig geneigten Pendelaufhängungen;
- Fig. 3:: einen Klemmhalter in einer gegenüber Fig. 1, 2 geänderten Ausbildung für eine sog. Feederaufhängung in geraden Fahrdrahtstrecken;
- Fig. 4:: die Seitenansicht eines Pendelkurvenhalters;
- Fig. 5 bis Fig. 7:: Untersicht, Seitenansicht und Draufsicht zu dem vergrößerten Tragschuh der Fig. 1;
- Fig. 8:: den Schnitt durch Fig. 6 nach deren Linie A;
- Fig. 9:: die Seitenansicht eines anderen Tragschuhs;
- Fig. 10 bis Fig. 12:: Draufsicht, teilweise geschnittene Seitenansicht und Stirnansicht des Jochstabes;
- Fig. 13:: ein vergrößertes Detail aus Fig. 1 mit teilweise geschnittenem Tragschuh;
- Fig. 14:: den Schnitt durch Fig. 13 entsprechend deren Linie A mit auf dem Tragschuh aufgeschraubtem Klemmdeckel;
- Fig. 15 bis Fig. 17:: teilweise geschnittene Seitenansicht, Untersicht und Draufsicht auf den Klemmdeckel;
- Fig. 18:: ein Auslegerrohr mit daran festgelegtem Tragschuh in Seitenansicht;
- Fig. 19:: den Schnitt durch Fig. 18 nach deren Linie XIX - XIX;
- Fig. 20, Fig. 21:: Seitenansicht und Draufsicht zu einem Tragschuh mit Isolierlatte;
- Fig. 22:: den vergrößerten Schnitt durch Fig. 20 nach deren Linie A;
- Fig. 23:: die Seitenansicht eines Tragschuhs für Einzelaufhängung;
- Fig. 24:: den Schnitt durch Fig. 23 nach deren Linie XXIV - XXIV;
- Fig. 25, Fig. 26:: Querschnitte durch Tragschuhe für Einzelaufhängung;
- Fig. 27:: die teilweise Seitenansicht zu Fig. 26;
- Fig. 28:: den Tragschuh eines Klemmhalters mit Trolleybus-Einfachpendel für eine Gerade in Seitenansicht;
- Fig. 29:: die geschnittene Stirnansicht zu Fig. 28;
- Fig. 30:: eine andere Ausführung zu einem Abschnitt der Fig. 29;
- Fig. 31:: die vergrößerte Seitenansicht eines Teils des Klemmhalters nach Fig 4;
- Fig. 32:: die Draufsicht auf Fig. 31;
- Fig. 33:: die Frontansicht zu Fig. 31, 32;
- Fig. 34:: den Schnitt durch Fig. 31 nach deren Linie XXXIV - XXXIV;
- Fig. 35:: einen vergrößerten Abschnitt des Klemmhalters der Fig. 4;
- Fig. 36:: die teilweise geschnittene Frontansicht zu Fig. 35;
- Fig. 37:: die Seitenansicht des Klemmhalters nach Fig. 4 in einer Ausbildung für eine sog. Feederaufhängung in Kurven.

Zwischen zwei in der Zeichnung vernachlässigten Festpunkten - - beispielsweise an Hauswänden oder Masten -- ist ein Tragseil 10 gespannt, welches den Fahrweg eines Oberleitungs- oder Trolleybusses bzw. die Schienen einer Straßenbahn quert.

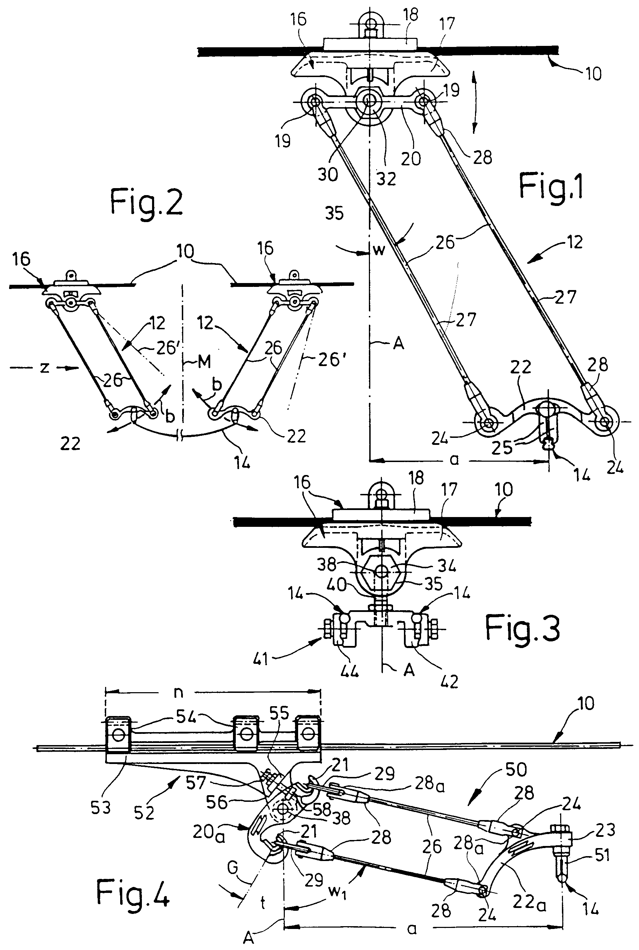

An dem Tragseil 10 ist in Fig. 1 eine Pendelaufhängung 12 für einen Fahrdraht 14 festgelegt, an welchem ein -- nicht wiedergegebener -- Stromabnehmer des Trolleybusses od.dgl. Fahrzeugs gleitet. Diese Pendelaufhängung 12 weist einen am Tragseil 10 rutschfest festgelegten Klemmhalter 16 aus einem Tragschuh 17 und einem diesen von oben her zugeordneten Klemmdeckel 18 -- beide aus zähem isolierendem Werkstoff geformt --, einen am Klemmhalter 16 einstellbar angebrachten --mit zwei endwärtigen Halteaugen 19 hantelähnlich aus Metall ausgebildeten -- Jochstab 20 und in Abstand zu diesem einen zu ihm im wesentlichen parallelen Bügel 22 auf. Dieser bietet seinerseits zwei endwärtige Halteaugen 24 an, die mit den Halteaugen 18 des dem Tragseil 10 nahen Jochstabes 20 durch Hängestränge 26 verbunden sind. Diese sind mittels Endverbindern 28, von denen jeweils zwei zusammen mit einem Strang 27 aus isolierendem Werkstoff oder aus Metalldraht den Hängestrang 26 bilden, in den Halteaugen 18, 24 justierbar angebracht, bevorzugt in einem Winkel w von etwa 30° zu einer Vertikalen. Der Endverbinder 28 kann als Leichtmetallhülse mit strangwärts konischem Abschnitt ausgebildet sein und einen von Gelenkbacken gehaltenen Gelenkbolzen 29a aufweisen, der lösbar ein Halteauge 18, 24 durchsetzt. Der Jochstab 20, der Bügel 22 und die beiden Hängestränge 26 bilden so ein Parallelogramm mit einem Auslenkmaß a zwischen der durch eine mittig den Tragschuh 17 durchsetzende Stellschraube 30 gelegten Vertikalen A und dem Fahrdraht 14.

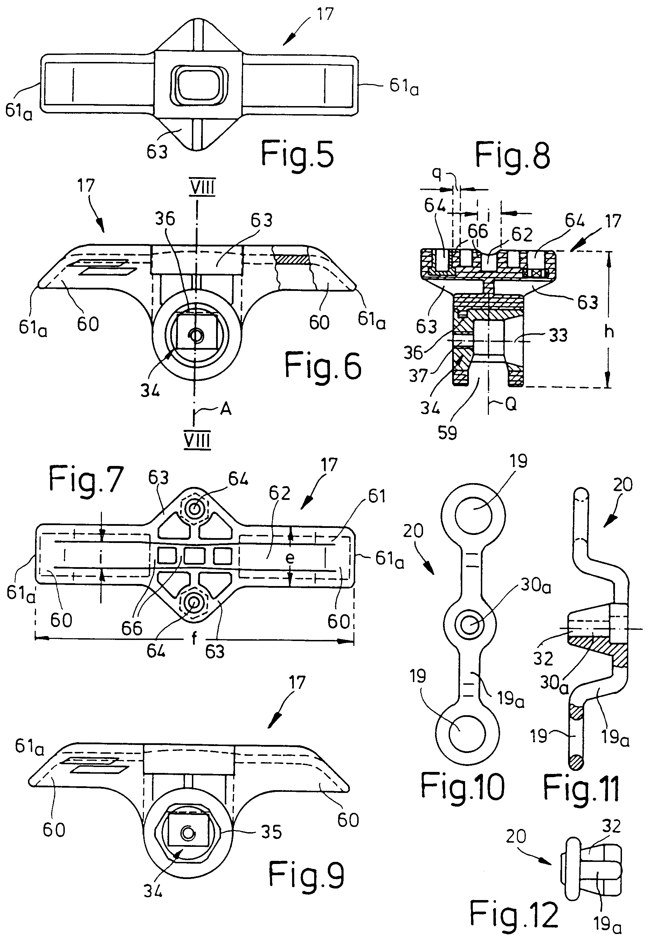

Der Jochstab 20 greift mit einem zentrisch angeformten Konuszapfen 32 als Lagerteil in eine sich nach innen entsprechend verjüngende Ausnehmung 33 (Fig. 8) als Anschlußauge jenes Tragschuhs 17 ein und wird von jener Stellschraube 30 durchsetzt, dank deren er am Klemmhalter 16 in jeder gewünschten Lage justiert festgelegt werden kann, d.h. in Fig. 1 etwa parallel zum Tragseil 10. Die sich verjüngende Ausnehmung 33 ist in einem metallischen Lagereinsatz 34 angeordnet, der undrehbar in den Werkstoff des Tragschuhs 17 eingegossen ist. In Fig. 1, 3 ist ein polygoner Rand 35 -- des quer zum Tragseil 10 verlaufenden Lagereinsatzes 34 -- an der Außenfläche des Tragschuhs 17 zu erkennen.

Der Fahrdraht 14 ist zwischen zwei Klemmbacken 25 des Bügels 22 so festgelegt, daß der größere Teil seines Umfanges zur Anlage an den erwähnten Stromabnehmer freiliegt. Die Klemmbacken 25 sind ihrerseits gegenüber dem Bügel 22 schwenkbar und justierbar.

In Fig. 2 ist ein Fahrdrahtabschnitt 14 zwischen zwei gegenläufig geneigten Pendelaufhängungen 12 skizziert und zwar bei Betrachtung des Fahrdrahtes 14 in Richtung der Fahrdrahtachse. Bei M ist die Fahrleitungsmitte angedeutet, mit 26' die Auslenkung der Hängestränge 26 nach rechts bei angenommener Windrichtung Z, wobei der linke Bügel 22 angehoben und der rechte Bügel 22 abgesenkt wird.

Die Pfeile b zeigen die Bewegungs- bzw. Schwingungsrichtung der beiden aufeinanderfolgenden Pendelaufhängungen 12 an. Wird der Fahrdraht 14 in Schwingungen versetzt, so werden letztere innerhalb kurzer Zeit bis zum Stillstand gedämpft, da die Bewegungsrichtungen der Pendelaufhängungen 12 um etwa 90° gegeneinander gerichtet sind.

Einen Klemmhalter 16 für ein Paar von Fahrdrähten 14 verdeutlicht Fig. 3. Der in den Tragschuh 17 undrehbar eingeformte metallische Lagereinsatz 34 ist hier -- statt mit einer sich verjüngenden Ausnehmung -- mit einem zentrischen Durchgang für einen Querbolzen 38 ausgestattet. Dieser durchsetzt einen in der Vertikalen A verlaufenden Geschirrbolzen 40 eines Hängegeschirrs 41. Diese Einrichtung dient als Feederaufhängung für gerade Strecken; hier lagern beidseits eines Querhauptes 42 zwei Fahrdrähte 14, an dessen beiden Enden sie durch jeweils eine Klemmbacke 44 klemmend angepreßt werden.

Um einen Trolleybus-Fahrdraht 14 wirtschaftlich aufzuhängen, sollen in Kurven nur wenige Stützpunkte verwendet werden, d.h. der Fahrdrahtwinkel muß an den Stützpunkten möglichst groß sein. Dieser Winkel wird zur Verhinderung schädlicher Seitenschläge des Stromabnehmers auf den Fahrdraht 14 ausgerundet; der Kopf des Fahrdrahtes 14 wird in zwei elastische Kurvenschienen geklemmt, deren Länge sich nach dem Fahrdrahtwinkel richtet. Diese Kurvenschienen werden ebenfalls über ein Parallelogrammpendel am Querspanndraht oder Tragseil 10 aufgehängt und sind beim Pendelkurvenhalter 50 der Fig. 4 bei 51 querschnittlich angedeutet.

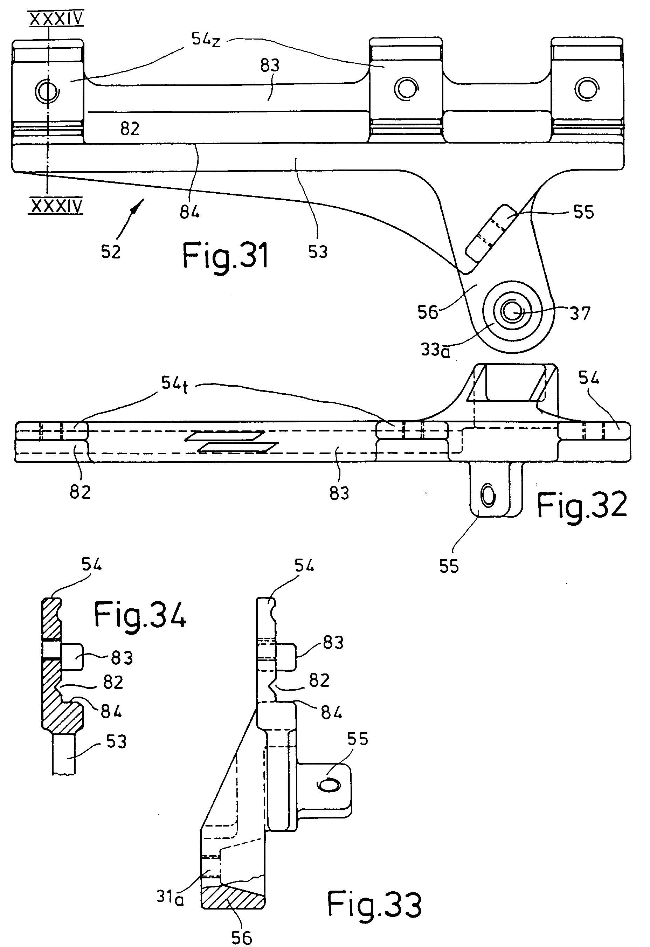

Dieser Pendelkurvenhalter 50 ist mittels eines -- ebenfalls aus isolierendem Werkstoff geformten -- Klemmhalters 52 am Tragseil 10 festgelegt, welcher seilwärts ein verhältnismäßig langes Klemmhaupt 53 (Länge n von hier 340 mm) besitzt, das vom Tragseil 10 durchlaufen wird und an diesem durch Klemmschellen 54 festliegt. Außermittig ist am Klemmhaupt 53 ein in Fig. 4 abwärts ragender freier Arm 56 angeformt mit einer mittigen Ausnehmung 33a (Fig. 31, 33). In deren Bereich ist ein Querbolzen 38 für einen waageähnlichen Jochstab 20a mit hakenförmigen Enden 21 zur Aufnahme von Ösen 29 der Endverbinder 28.

Eine Gerade G durch die Enden 21 des Jochstabes 20a schließt mit der Vertikalen A einen Winkel t von etwa 30° ein, der durch eine in einer Anformung 55 des Klemmhauptes 53 drehbar festliegende Justierschraube 57 eingestellt werden kann; deren freies Ende stützt sich gegen einen Anschlag 58 am Jochstab 20a ab. Der Winkel w1 zwischen der Vertikalen A und den Hängesträngen 26 mißt hier etwa 100°, und der Fahrdraht 14 wird von jenen Kurvenschienen 51 als Klemmeinrichtung gehalten, welche außerhalb des Parallelogramms am Jochstab 20a, Haltesträngen 26 und Bügel 22a an einer seitlichen Verlängerung 23 des hier gebogenen Bügels 22a vorgesehen ist.

Die Ausbildung des eine Anlenkstelle bildenden Tragschuhs 17 der Höhe h von beispielsweise 75 mm aus isolierendem Kunststoff lassen Fig. 5 bis 9 erkennen, wobei die Linie A hier auch eine durch die Mitte der Seitenansicht des Tragschuhs 17 gelegte Symmetriegerade ist. Beidseits deren kragt jeweils ein flügelartiger Abschnitt 60 ab, in deren Oberseite 61 der Breite e von beispielsweise 38 mm und der Länge f von 170 mm eine zu den Endkanten 61a abfallende Längsnut 62 der Weite i von hier 14 mm für das Tragseil 10 eingeformt ist. Beidseits der Längsnut 62 sind in seitlichen Erweiterungen 63 des Tragschuhs 17 Sacklöcher 64 eingeformten metallischen Schraubhülsen 64a für Spannschrauben 65 des Klemmdeckels 18 angebracht. Durch Einformungen entstehen an der Oberfläche Formrippen 66; materialgerecht liegen alle Wanddicken q bei höchstens etwa 5 mm.

In der Ausführung der Fig. 6 ist der Randumfang des metallischen Lagereinsatzes 34 kreisförmig; ein in ihm vorgesehener Segmenteinschnitt 36 verleiht auch diesem Lagereinsatz 34 einen undrehbaren Sitz; dieser nutartige Segmenteinschnitt 36 ist besonders in Fig. 8 erkennbar und nimmt beim Herstellen des Tragschuhs 17 einen zur Rippe erstarrenden Teil von dessen Werkstoff auf.

Der undrehbare Sitz entsteht bei der Ausführung der Fig. 9 --in bereits zu Fig. 1 geschilderter Weise -- durch eine insgesamt polygone Randkontur 35 des Lagereinsatzes 34.

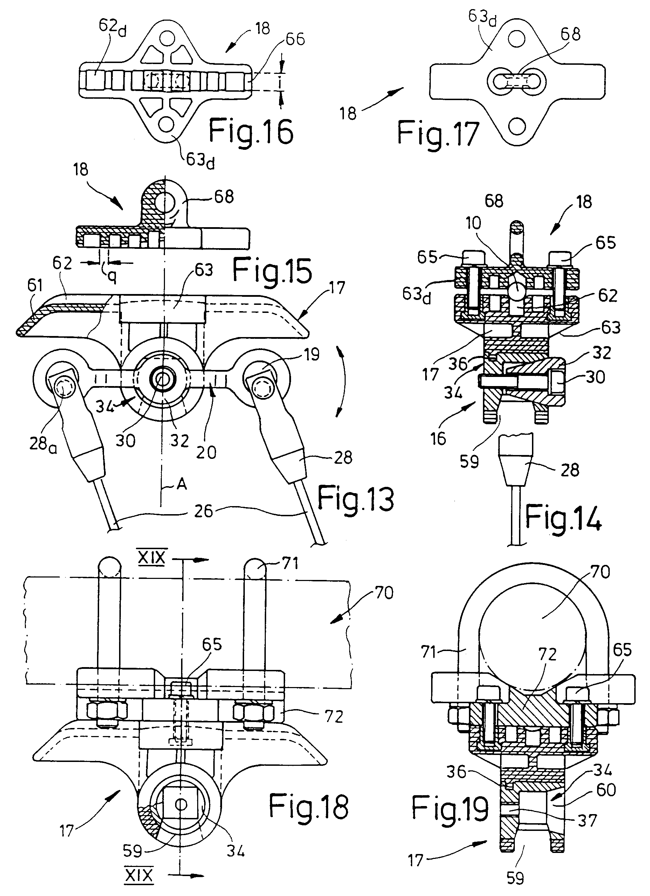

Insbesondere Fig. 8 zeigt den metallischen Lagereinsatz 34 mit der sich zur Mittellinie Q des Querschnitts hin verjüngenden und abwärts bei 59 öffnenden Ausnehmung 33 für den Konuszapfen 32 des Jochstabes 20 nach Fig. 10 bis 14 sowie die Zylinderausnehmung 37 im Lagereinsatz 34 für die Stellschraube 30, welche im Jochstab 20 einen Zentraldurchbruch 30a durchgreift. An den Konuszapfen 32 schließen beidseits gekröpfte Arme 19a am Rundstahl an, deren Enden zu Ösen gebogen sind. Daß die untere Öffnung 59 der Ausnehmung 33 im metallischen Lagereinsatz 34 sich abwärts konisch erweitert, verdeutlicht Fig. 18.

Auch der Klemmdeckel 18 ist mit einer -- wenn auch flacheren -- Längsnut 62d und mit seitlichen Erweiterungen 63d ausgestattet, zudem mit einer Zugöse 68.

In Fig. 18, 19 ist mit dem Tragschuh 17 ein ihn haltendes Auslegerrohr 70 durch Bügelschrauben 71 verbunden, die einen besonderen Flachdeckel 72 durchsetzen; dieser ersetzt den zuvor beschriebenen Klemmdeckel 18 und ist wie dieser durch Spannschrauben 65 an den Tragschuh 17 angeschlossen.

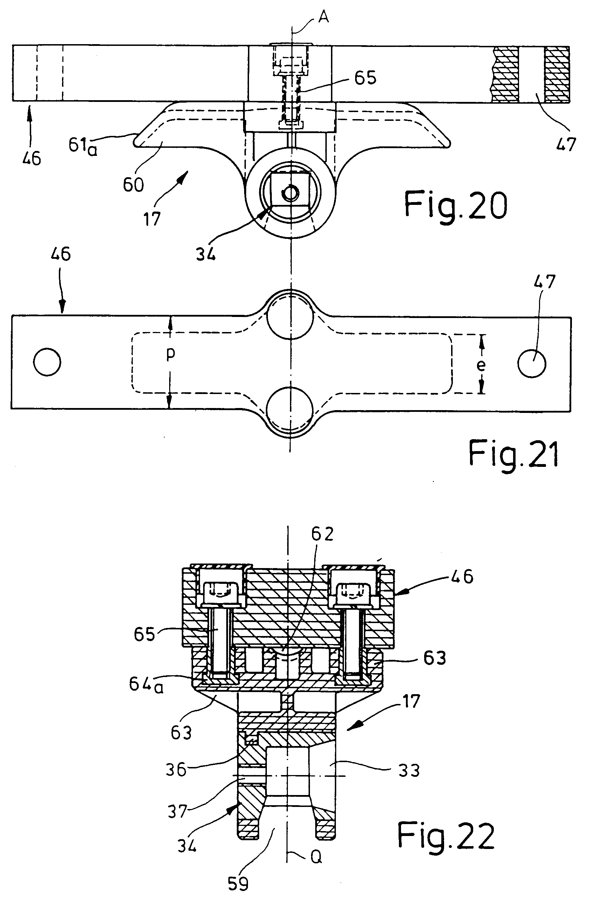

Mit dem Tragschuh 17 der Fig. 20 bis 23 ist eine Isolierlatte 46 einer Breite y von 50 mm verschraubt, um diesen beispielsweise an der Decke eines Gebäudes festlegen zu können. Hierzu dienen Durchgänge 47 in der Isolierlatte 46.

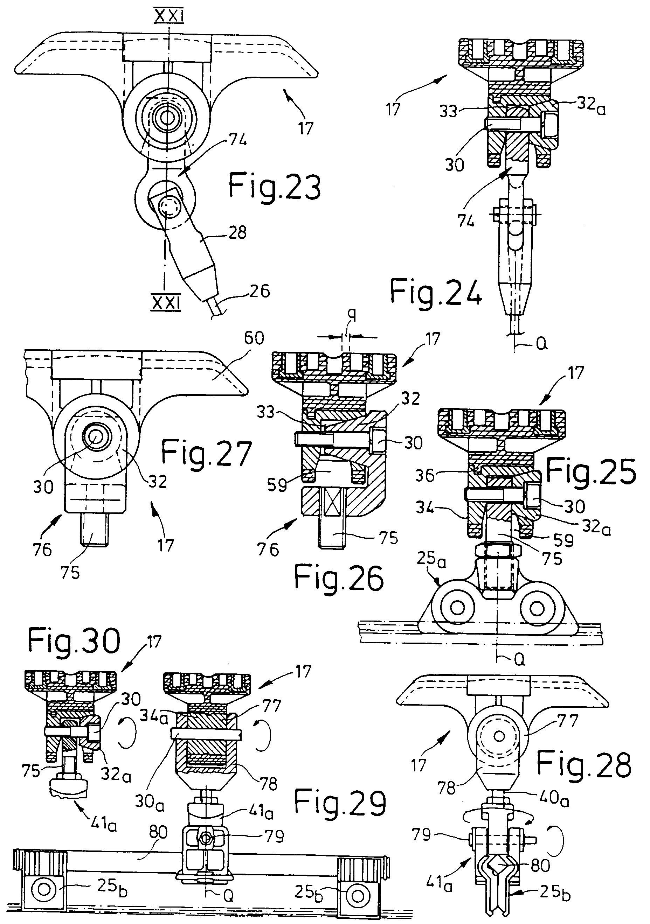

Bei einer Einzelaufhängung nach Fig. 23, 24 ist eine Tragöse 74 für einen Hängestrang 26 von unten her in die Ausnehmung 59 eingesetzt und wird dort von der ihn durchgreifenden Stellschraube 30 gehalten. Mit 32a ist ein Konuszapfen bezeichnet, der die Stellschraube 30 mutterartig umfängt und ihr Verspannen vereinfacht.

Eine starre Einzelaufhängung mit Klemmschuh 25a an einem von der Stellschraube 30 durchgriffenen Bolzen als Anschlußelement 75 in Querschnittsmittellinie Q gibt Fig. 25 wieder.

Auch in Fig. 26, 27 ist ein solches Anschlußelement 75 dargestellt, hier als Teil eines insgesamt querschnittlich U-förmigen Tragstücks 76, das mit einem angeformten Konuszapfen 32 von außen her in die konische Ausnehmung 33 eingesetzt zu werden vermag.

Das einen Büchseneinsatz 34a enthaltende Mittelstück 77 eines Tragschuhs 17 für Trolleybus-Einfachpendel in Geraden trägt nach Fig. 28, 29 einen U-Halter 78, um dessen in Querschnittslinie Q vorgesehenen zentralen Zapfen 40a ein Geschirr 41a drehbar -- sowie um einen Querzapfen 79 schwenkbar -- ist. Der U-Halter 78 ist an den Büchseneinsatz 34a durch einen Stift 30a angeschlossen. Das Geschirr 41a nimmt eine quer gerichtete Stellschiene 80 für daran verschiebbare Klemmbacken 25b auf. Das Geschirr 41a ist im Tragschuh 17 nach Fig. 30 -- entsprechend der Ausführung der Fig. 25 --innen aufgehängt.

Die Fig. 31 bis 36 verdeutlichen den Klemmhalter 52 des Pendelkurvenhalters 50 der Fig. 4 mit zinnenartigen Widerlagerbacken 54z für die aufzuschraubenden Klemmschellen 54 sowie mit einer konischen Ausnehmung 33a im freien Arm 56 und einer Zylinderausnehmung 37 für den Querbolzen 38. Die Klemmschellen 54 sind in Fig. 31, 32 vernachlässigt. Das Tragseil 10 verläuft hier in einer Rille 82 zwischen einer oberen Rippe 83 und einem unteren Schulterabsatz 84. Eine Konusanformung 32 des Jochstabes 20a ruht in der Ausformung 33a des freien Arms 56 und kann dort durch den Querbolzen 38 gehalten sowie festgelegt werden. Wie bereits zu Fig. 4 erwähnt, übernimmt die Klemmschraube 57 die Aufgabe, den Winkel t zwischen der Vertikalen A und der -- durch die freien Spitzen von Metallbelägen 21a der Hakenenden 21 des Jochstabes 20a gelegten --Geraden G zu justieren. Die Aufnahmerinnen dieser Hakenenden 21 sind in gleichen mittigen Abständen g zum Querbolzen 38 angeordnet und öffnen sich gleichgerichtet.

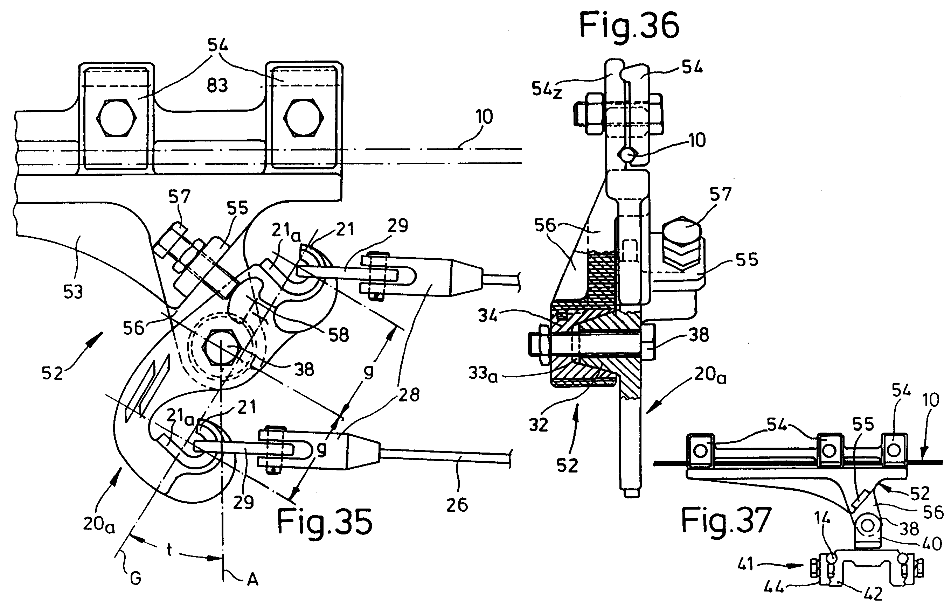

Schließlich verdeutlicht Fig. 37 einen Klemmhalter 52 in Zusammenhang mit einem Hängegeschirr 41 für eine Feederaufhängung (siehe auch Fig. 3).

Der für die Formkörper 17, 18, 20a, 52 eingesetzte Werkstoff ist bevorzugt ein Polyamid 6,6 mit einer etwa 50%-igen Verstärkung in form langer Glasfasern. Dieser Werkstoff hat - - trocken konditioniert, mechanische Werte bei 23° --beispielsweise die folgenden Eigenschaften:

| Eigenschaft | DIN | Einheit | Wert |
|---|---|---|---|
| (a) Dichte | 53479 | g/cm³ | 1.57 |
| (b) Wasseraufnahme (24 h) | 53495 | % | 0,4 |
| (c) Shore-Härte | 53505 | D | 87 |
| (d) Zugfestigkeit | 53455 | MPa | 200 |
| (e) Dehnung | 53455 | % | 3 |
| (f) Biegefestigkeit | 53452 | MPa | 320 |
| (g) E-Modul | 53452 | GPa | 12 |
| (h) Schlagzähigkeit | -- | kJ/m² | 11 |
| (i) Schmelzpunkt | -- | °C | 263 |
| (k) Dielektrizitätskonstante | -- | bei 50 Hz | 4,1 |
| (l) spez.Durchgangswiderstand | -- | Ohm m | 1013 |
| (m) Kriechstromfestigkeit | | KC Volt | 600 |

## Patentansprüche

1. Vorrichtung zum Aufhängen wenigstens eines stromführenden Fahrdrahtes (14) für Stromabnehmer von Oberleitungsbussen oder Straßenbahnen mit an einem Tragseil (10) od. dgl. strangförmigen Halteorgan festlegbarem Verbindungselement (16), insbesondere einer Klemmeinrichtung, sowie mit einem gegen das Tragseil isolierten Greiforgan (25), insbesondere mit Klemmbacken, für den Fahrdraht, wobei das Verbindungselement einen Tragschuh (17) mit einer Aufnahme für ein darin bewegliches Lagerteil (32,32ₐ) eines Tragelementes (20,40) als Gelenkstelle sowie einen mit dem Tragschuh verschraubbaren Klemmdeckel (18) aufweist, zwischen welchem und dem Tragschuh in einer Längsnut (62) das Tragseil rutschfest festlegbar ist,
dadurch gekennzeichnet,
daß das Verbindungselement (16) aus einem isolierenden Kunststoff geformt ist und der Tragschuh (17) als Aufnahme ein Anschlußauge (33) für das Lagerteil (32,32ₐ) aufweist, das den Tragschuh (17) quer zum Tragseil (10) mit einem Achsstift (30) durchgreift.

2. Vorrichtung zum Aufhängen wenigstens eines stromführenden Fahrdrahtes (14) für Stromabnehmer von Oberleitungsbussen oder Straßenbahnen mit an einem Tragseil (10) od. dgl. strangförmigen Halteorgan festlegbarem Verbindungselement (52), insbesondere einer Klemmeinrichtung, sowie mit einem gegen das Tragseil isolierten Greiforgan (51), insbesondere mit Klemmbacken, für den Fahrdraht, wobei das Verbindungselement einen Tragschuh (56) mit einer Aufnahme für ein darin bewegliches Lagerteil (32) eines Tragelementes (20a) als Gelenkstelle sowie einen mit dem Tragschuh verschraubbaren Klemmdeckel (54) aufweist, zwischen welchem und dem Tragschuh in einer Längsnut (62) das Tragseil rutschfest festlegbar ist, dadurch gekennzeichnet, daß der Tragschuh ein lineares Klemmhaupt (53) mit an dieses in Längsrichtung außermittig angeformten freiem Arm (56) mit wenigstens einem Anschlußauge (33ₐ) als Aufnahme für das Lagerteil (32) des Tragelements (20ₐ) sowie das Klemmhaupt durch einen als Klemmteil für das Tragseil ausgebildeten Auslegerabschnitt parallel zum Tragseil seitlich verlängert ist, an das Klemmhaupt Klemmschellen (54) als Klemmdeckel für das dazwischen einklemmbare Tragseil (10) anschraubbar sind sowie das Tragelement um einen den Arm (56) und das Lagerteil (32) durchsetzenden Querbolzen (38) od. dgl. Achsstift parallel zum Arm (56) drehbar feststellbar ist, wobei das Verbindungselement (52) aus einem isolierenden Kunststoff geformt ist.

3. Vorrichtung zum Aufhängen wenigstens eines stromführenden Fahrdrahtes (14) für Stromabnehmer von Oberleitungsbussen oder Straßenbahnen mit an einem Tragseil (10) od. dgl. strangförmigen Halteorgan festlegbaren Verbindungselement (16), insbesondere einer Klemmeinrichtung, sowie mit einem gegen das Tragseil isolierten Greiforgan (25), insbesondere mit Klemmbacken, wobei am Verbindungselement für den Fahrdraht eine parallelogrammartige Hängeeinrichtung (12) aus einem Paar von Hängesträngen (26) und zwei durch diese verbundenen jochartigen Querelementen (20,22) angebracht sowie eines der Querelemente dem Greiforgan zugeordnet ist, dadurch gekennzeichnet, daß das Verbindungselement (16) einen Tragschuh (17) mit einem Anschlußauge (33) als Aufnahme für ein darin festlegbares Lagerteil (32,32ₐ) des Querelements (20,20ₐ) als Gelenkstelle und einen mit dem Tragschuh (17) verschraubbaren Klemmdeckel (18,72) aufweist, zwischen welchem und dem Tragschuh (17) in einer Längsnut (62,62_{d}) das Tragseil (10) rutschfest festlegbar ist, wobei das Verbindungselement (16) aus einem isolierenden Kunststoff geformt ist und einen einheitlichen Formkörper bildet, der das Anschlußauge (33) als Aufnahme für das ihm gegenüber verstellbare Querelement für das Greiforgan (25,25ₐ,25_{b}) aufweist.

4. Vorrichtung nach Anspruch 3, dadurch gekennzeichnet, daß das Verbindungselement (52) ein lineares Klemmhaupt (53) mit Klemmschellen (54) als Klemmdeckel für das dazwischen einklemmbare Tragseil (10) ist sowie an das Klemmhaupt (53) in Längsrichtung außermittig ein freier Arm (56) mit wenigstens einem Anschlußauge (33ₐ) als Aufnahme für das Lagerteil (32) des Tragelements (20ₐ) angeformt ist, welches um den den Arm (56) und das Lagerteil durchsetzenden Querbolzen (38) od. dgl. Achsstift parallel zum Arm (56) drehbar feststellbar ist, wobei das Klemmhaupt (53) durch einen Auslegerabschnitt parallel zum Tragseil seitlich verlängert sowie dieser als Klemmteil für das Tragseil ausgebildet ist.

5. Vorrichtung nach Anspruch 3 oder 4, dadurch gekennzeichnet, daß das dem Tragseil (10) nahe Querelement als Jochstab (20,20ₐ) mit einem zapfenartigen Organ (32,32ₐ,32_{b}) in das Anschlußauge (33,33ₐ) des Verbindungselementes (16,52) einsetzbar und durch eine Stellschraube (38) od. dgl. Stelleinrichtung festlegbar ist.

6. Vorrichtung nach einem der Ansprüche 1 bis 5, dadurch gekennzeichnet, daß das Verbindungselement (16,52) aus einem mit dem Kunststoff ummantelten Metall geformt ist.

7. Vorrichtung nach Anspruch 1 oder 2, gekennzeichnet durch eine parallelogrammartige Hängeeinrichtung (12,50) aus einem Paar von Hängesträngen (26) und zwei durch diese verbundenen jochartigen Querelementen (20,22;20a,22a), deren eines dem Greiforgan (25;51) zugeordnet ist, wobei das dem Tragseil (10) nahe Querelement als Jochstab (20,20a) mit einem zapfenartigen Organ (32,32a,32b) in das Anschlußauge (33,33a) des Verbindungselementes (16,52) einsetzbar und durch eine Stellschraube (38) od. dgl. Stelleinrichtung festlegbar ist.

8. Vorrichtung nach einem der Ansprüche 3 bis 7, dadurch gekennzeichnet, daß der Jochstab (20,20a) in seiner Neigung zu dem das Anschlußauge (33a) des Verbindungselements (16,52) enthaltenden Teil (17;53,56) einstellbar und justierbar ist.

9. Vorrichtung nach einem der Ansprüche 2 bis 8, dadurch gekennzeichnet, daß an dem Klemmhaupt (53) bzw. an dessen freien Arm (56) oder am Jochstab (20a) in Abstand zum Anschlußauge (33a) eine Justierschraube (57) lagert, deren freies Ende mit einem Anschlag (58) des jeweils anderen Teiles (33a,20a) zusammenwirkt.

10. Vorrichtung nach einem der Ansprüche 3 bis 8, dadurch gekennzeichnet, daß die freien Enden (21) des Jochstabes (20a) zur Aufnahme jeweils eines Endes (28) der Hängestränge (26) hakenartig ausgebildet sind.

11. Vorrichtung nach einem der Ansprüche 3 bis 9, dadurch gekennzeichnet, daß der Hängestrang (26) aus Isolierwerkstoff besteht und beidends in rohrförmigen Endverbindern (28) aus Metall mit konischem Abschnitt sitzt, wobei der Eckverbinder einen Gelenkbolzen (28a) als Anschlußorgan aufweist.

12. Vorrichtung nach einem der Ansprüche 1 bis 11, dadurch gekennzeichnet, daß die als Anschlußauge dienende Ausnehmung (33,33a) in einen Lagereinsatz (34,34a) aus gegenüber dem Verbindungselement (16,52) härterem Werkstoff eingeformt ist, bevorzugt in einen Einsatz aus Metall, der gegebenenfalls in den Tragschuh (17) oder den Arm (56) des Klemmhauptes (53) eingegossen ist.

13. Vorrichtung nach Anspruch 12, dadurch gekennzeichnet, daß der Lagereinsatz (34,34a) einen polygonen Abschnitt (35) im Bereich des Tragschuhs (17) oder des Armes (56) und/oder wenigstens eine Retention aufweist, bevorzugt einen Segmenteinschnitt (36).

14. Vorrichtung nach wenigstens einem der Ansprüche 1 bis 13, dadurch gekennzeichnet, daß die quer zur Hängerichtung (A) verlaufende Ausnehmung (33,33a) des Lagereinsatzes (34,34a) sich nach innen konisch verjüngt und in eine Zylinderbohrung (37) für eine Stellschraube (30) od. dgl. Element übergeht, wobei gegebenenfalls die Ausnehmung (33,33a) in Hängerichtung (A) offen ist und sich diese Öffnung (59) bevorzugt abwärts konisch erweitert.

15. Vorrichtung nach einem der Ansprüche 5 bis 14, dadurch gekennzeicnet, daß das zapfenartige Organ des Jochstabes (20,20a) ein Konuszapfen (32) sowie von der Stellschraube (30) durchgreifbar ist, und/oder, daß ein Jochstab (20) mit radial vom Konuszapfen (32) abragenden gekröpften Armen (19a) vorgesehen ist, die in Ösen als Halteaugen (19) enden.

16. Vorrichtung nach Anspruch 15, dadurch gekennzeichnet, daß der Konuszapfen (32) Teil eines querschnittlich U-förmigen Tragstücks (76) ist, das mit einem Arm den Tragschuh (17) etwa mittig untergreift, oder, daß in die untere Öffnung (59) der Ausnehmung (33,33a) ein bolzenartiges Anschlußelement (74,75) einführbar und durch die Stellschraube (30) gehalten ist, die bevorzugt ein Konuselement (38a) durchsetzt.

17. Vorrichtung nach einem der Ansprüche 1 bis 16, dadurch gekennzeichnet, daß der Tragschuh (17) im Bereich des Lagereinsatzes (34a) von laschenartigen Verbindungselementen eines Halters (78) abgedeckt ist, der ein Hängegeschirr (41a) trägt.

18. Vorrichtung nach Anspruch 16 oder 17, dadurch gekennzeichnet, daß das Tragstück (76) bzw. das bolzenartige Anschlußelement (74,75) oder das Hängegeschirr (41,41a) mit der Stellschraube (30) undrehbar festgelegt ist, wobei gegebenenfalls das Hängegeschirr (41) zwei Klemmstellen (42,44) für parallele Fahrdrähte (14) aufweist.

19. Vorrichtung nach Anspruch 17 oder 18, dadurch gekennzeichnet, daß am Tragschuh (17) ein um zumindest eine Achse (A,79) drehbares Hängegeschirr (41a) vorgesehen ist, das gegebenenfalls eine quer zum Tragseil (10) verlaufende Stellschiene (80) für Klemmeinrichtungen (25b) aufweist.

20. Vorrichtung nach wenigstens einem der Ansprüche 1 bis 19, dadurch gekennzeichnet, daß der Tragschuh (17) und/oder der Klemmhalter (52) als flacher Körper ausgebildet sind/ist, deren/dessen Breite (e) bevorzugt unter 50 mm liegt, und/oder, daß der Tragschuh (17) beidseits einer Symmetriegeraden (A), welche die Achse der konischen Ausnehmung (33) quert, flügelartige Abschnitte (60) aufweist, die eine Oberseite (61) zur Anlage an ein Tragseil (10) anbieten, und daß auf die Oberseite ein Klemmdeckel (18) aufschraubbar ist.

21. Vorrichtung nach wenigstens einem der Ansprüche 1 bis 20, dadurch gekennzeichnet, daß der Tragschuh (17) beidseits einer die Achse der konischen Ausnehmung (33) querenden Symmetriegeraden (A) flügelartige Abschnitte (60) aufweist, welche eine Oberseite (61) für einen Klemmdeckel (72) anbieten, der auf den Tragschuh aufschraubbar und mit Bügelschrauben (71) od. dgl. Befestigungselementen für ein strangförmiges Tragrohr (70) versehen ist, wobei gegebenenfalls die Oberseite (61) mit der eingeformten Längsnut (62) zu ihren Endkanten (61a) hin abwärts gekrümmt ist.

22. Vorrichtung nach wenigstens einem der Ansprüche 1 bis 20, dadurch gekennzeichnet, daß der Tragschuh (17) beidseits einer die Achse der konischen Ausnehmung (33) querenden Symmetriegeraden (A) flügelartige Abschnitte (60) aufweist, welche eine Oberseite (61) zur Anlage an eine strangförmige Isolierlatte (46) aufweisen, wobei gegebenenalls die Oberseite (61) mit der eingeformten Längsnut (62) zu ihren Endkanten (61a) hin abwärts gekrümmt ist.

23. Vorrichtung nach Anspruch 21 oder 22, dadurch gekennzeichnet, daß der Tragschuh (17) seitliche Erweiterungen (63) aufweist mit eingeformten Schraubhülsen (64a) für Spannschrauben (65) des Klemmdeckels (18,72) oder der Isolierlatte (46), und/oder, daß zumindest der Tragschuh (17) und/oder das Klemmhaupt (53) aus einem glasfaserverstärktem Polyamid geformt sind/ist.

## Claims

1. Suspension device for at least one live contact wire (14) for current collectors of trolley-buses or trams, comprising a connecting element (16), in particular a clamping means, which can be fixed to a carrier cable (10) or similar cord-like holding member, and a gripping member (25), in particular with clamping jaws, for the contact wire, insulated with respect to the carrier cable, the connecting element having a main cable bearing (17) with a recess for a bearing part (32, 32ₐ) of a supporting element (20, 40) movable therein to form a hinge point and a clamping cover (18) which can be screwed on to the main cable bearing, wherein the carrier cable can be non-slidably fixed in a longitudinal groove (62) between the said clamping cover and the main cable bearing, characterised in that the connecting element (16) is made of an insulating plastic and the main cable bearing (17) has a connecting eye (33) forming a recess for the bearing part (32, 32ₐ) which traverses the main cable bearing (17) transversely to the carrier cable (10) by means of an axle pin (30).

2. Suspension device for at least one live contact wire (14) for current collectors of trolley-buses or trams, comprising a connecting element (52), in particular a clamping means, which can be fixed to a carrier cable (10) or similar cord-like holding member, and a gripping member (51), in particular with clamping jaws, for the contact wire, insulated with respect to the carrier cable, the connecting element having a main cable bearing (56) with a recess for a bearing part (32) of a supporting element (20ₐ) movable therein to form a hinge point and a clamping cover (54) which can be screwed on to the main cable bearing, wherein the carrier cable can be non-slidably fixed in a longitudinal groove (62) between the said clamping cover and the main cable bearing, characterised in that the main cable bearing is a linear clamping head (53) with a free arm (56) moulded on eccentrically in the longitudinal direction thereof with at least one connecting eye (33ₐ) forming a recess for the bearing part (32) of the supporting element (20ₐ) and the clamping head is extended laterally parallel to the carrier cable by an extension arm portion forming a clamping part for the carrier cable, clips (54) can be screwed on to the clamping head forming clamping covers for the carrier cable (10) which can be clamped therebetween and the supporting element can be fixed to rotate parallel to the arm (56) about a transverse bolt (38) or similar axle pin traversing the arm (56) and the bearing part (32), the connecting element (52) being made of an insulating plastic.

3. Suspension device for at least one live contact wire (14) for current collectors of trolley-buses or trams, comprising a connecting element (16), in particular a clamping means, which can be fixed to a carrier cable (10) or similar cord-like holding member, and a gripping member (25), in particular with clamping jaws, insulated with respect to the carrier cable, a parallelogrammic suspension means (12) consisting of a pair of suspension cords (26) and two yoke-like transverse elements (20, 22) connected by the latter being fitted to the connecting element for the contact wire and one of the transverse elements being associated with the gripping member, characterised in that the connecting element (16) has a main cable bearing (17) with a connecting eye (33) forming a recess for a bearing part (32, 32ₐ) of the transverse element (20, 20ₐ) which can be fixed therein to form a hinge point and a clamping cover (18, 72) which can be screwed on to the main cable bearing (17), wherein the carrier cable (10) can be non-slidably fixed in a longitudinal groove (62, 62_{d}) between the said clamping cover and the main cable bearing (17), the connecting element (16) being made of an insulating plastic and forming a uniform moulded body having the connecting eye (33) forming a recess for the transverse element for the gripping member (25, 25ₐ, 25_{b}) adjustable relative thereto.

4. Device according to claim 3, characterised in that the connecting element (52) is a linear clamping head (53) with clips (54) forming clamping covers for the carrier cable (10) which can be clamped therebetween and a free arm (56) with at least one connecting eye (33ₐ) forming a recess for the bearing part (32) of the supporting element (20ₐ) is moulded eccentrically on to the clamping head (53) in the longitudinal direction thereof, wherein said supporting element can be fixed to rotate parallel to the arm (56) about the transverse bolt (38) or similar axle pin traversing the arm (56) and the bearing part, the clamping head (53) being extended laterally parallel to the carrier cable by an extension arm portion forming a clamping part for the carrier cable.

5. Device according to claim 3 or claim 4, characterised in that the transverse element close to the carrier cable (10) forming a yoke bar (20, 20ₐ) can be inserted into the connecting eye (33, 33ₐ) of the connecting element (16, 52) via a pin-shaped member (32, 32ₐ, 32_{b}) and can be fixed by an adjusting screw (38) or similar adjusting means.

6. Device according to one of claims 1 to 5, characterised in that the connecting element (16, 52) is made of a metal encased in the plastic.

7. Device according to claim 1 or claim 2, characterised by a parallelogrammic suspension means (12, 50) consisting of a pair of suspension cords (26) and two yoke-like transverse elements (20, 22; 20ₐ, 22ₐ) connected by the latter, one of which is associated with the gripping member (25; 51), wherein the transverse element close to the carrier cable (10) forming a yoke bar (20, 20ₐ) can be inserted into the connecting eye (33, 33ₐ) of the connecting element (16, 52) via a pin-shaped member (32, 32ₐ, 32_{b}) and can be fixed by an adjusting screw (38) or similar adjusting means.

8. Device according to one of claims 3 to 7, characterised in that the inclination of the yoke bar (20, 20ₐ) relative to the part (17; 53, 56) containing the connecting eye (33ₐ) of the connecting element (16, 52) is adjustable.

9. Device according to one of claims 2 to 8, characterised in that an adjusting screw (57) is mounted on the clamping head (53) or on the free arm (56) thereof or on the yoke bar (20ₐ) at a distance from the connecting eye (33ₐ), its free end cooperating with a stop (58) on the respective other part (33ₐ, 20ₐ).

10. Device according to one of claims 3 to 8, characterised in that the free ends (21) of the yoke bar (20ₐ) are each hook-shaped so as to receive one end (28) of the suspension cords (26).

11. Device according to one of claims 3 to 9, characterised in that the suspension cord (26) consists of insulating material and is seated at either end in tubular end connectors (28) of metal with a conical portion, the corner connector having a hinge pin (28ₐ) forming a connecting member.

12. Device according to one of claims 1 to 11, characterised in that the recess (33, 33ₐ) serving as a connecting eye is moulded into a bearing insert (34, 34ₐ) made of harder material than that of the connecting element (16, 52), preferably into an insert of metal which is optionally cast into the main cable bearing (17) or the arm (56) of the clamping head (53).

13. Device according to claim 12, characterised in that the bearing insert (34, 34ₐ) has a polygonal portion (35) in the region of the main cable bearing (17) or the arm (56) and/or at least one retention means, preferably a segmental notch (36).

14. Device according to at least one of claims 1 to 13, characterised in that the recess (33, 33ₐ) of the bearing insert (34, 34ₐ) extending transversely to the direction of suspension (A) tapers inwardly and passes over into a cylindrical bore (37) for an adjusting screw (30) or similar element, the recess (33, 33ₐ) optionally being open in the direction of suspension (A) and this opening (59) preferably flaring out towards the bottom.

15. Device according to one of claims 5 to 14, characterised in that the pin-shaped member of the yoke bar (20, 20ₐ) is a conical pin (32) and can be traversed by the adjusting screw (30) and/or that a yoke bar (20) is provided with cranked arms (19ₐ) projecting radially from the conical pin (32) and ending in eyelets forming holding eyes (19).

16. Device according to claim 15, characterised in that the conical pin (32) is part of a supporting piece (76) with a U-shaped cross section which engages the main cable bearing (17) approximately eccentrically from below via an arm or that a bolt-shaped connecting element (74, 75) can be introduced into the lower opening (59) of the recess (33, 33ₐ) and is held by the adjusting screw (30) which preferably traverses a conical element (38ₐ).

17. Device according to one of claims 1 to 16, characterised in that the main cable bearing (17) is covered in the region of the bearing insert (34ₐ) by strap-like connecting elements of a holder (78) which carries suspension gear (41ₐ).

18. Device according to claim 16 or claim 17, characterised in that the supporting piece (76) or the bolt-shaped connecting element (74, 75) or the suspension gear (41, 41ₐ) is non-rotatably fixed by the adjusting screw (30), the suspension gear (41) optionally having two clamping points (42, 44) for parallel contact wires (14).

19. Device according to claim 17 or claim 18, characterised in that suspension gear (41ₐ) rotatable about at least one axis (A, 79) is provided on the main cable bearing (17) and optionally has a slide rail (80) for clamping means (25_{b}) extending transversely to the carrier cable (10).

20. Device according to at least one of claims 1 to 19, characterised in that the main cable bearing (17) and/or the clamp-type holder (52) is a flat body, the width (e) of which is preferably less than 50 mm and/or that the main cable bearing (17) has wing-shaped portions (60) on either side of a straight line of symmetry (A) which traverses the axis of the conical recess (33), thereby providing an upper surface (61) for bearing against a carrier cable (10), and that a clamping cover (18) can be screwed on to the upper surface.

21. Device according to at least one of claims 1 to 20, characterised in that the main cable bearing (17) has wing-shaped portions (60) on either side of a straight line of symmetry (A) traversing the axis of the conical recess (33), thereby providing an upper surface (61) for a clamping cover (72) which can be screwed on to the main cable bearing and is provided with U-bolts (71) or similar securing elements for a cord-like carrier tube (70), the upper surface (61) with the moulded-in longitudinal groove (62) optionally being curved downwards at its end edges (61ₐ).

22. Device according to at least one of claims 1 to 20, characterised in that the main cable bearing (17) has wing-shaped portions (60) on either side of a straight line of symmetry (A) traversing the axis of the conical recess (33) and having an upper surface (61) for bearing against a cord-like insulating slat (46), the upper surface (61) with the moulded-in longitudinal groove (62) optionally being curved downwards at its end edges (61ₐ).

23. Device according to claim 21 or claim 22, characterised in that the main cable bearing (17) has lateral extensions (63) with moulded-in collets (64ₐ) for locking screws (65) of the clamping cover (18, 72) or the insulating slat (46) and/or that at least the main cable bearing (17) and/or the clamping head (53) is/are made of a glass-fibre reinforced polyamide.

## Revendications

1. Dispositif de suspension d'au moins un fil de contact (14) conducteur de courant pour des appareils de prise de courant de trolleybus ou de tramways comportant un élément de liaison (16) pouvant être fixé à un câble porteur (10) ou organe de retenue en forme de corde de même type, en particulier un système de serrage, ainsi qu'un organe de préhension (25) isolé par rapport au câble porteur, comportant en particulier des mâchoires de serrage, pour le fil de contact, l'élément de liaison comportant un sabot porteur (20, 40) comprenant un logement pour une pièce de support (32, 32a), mobile dans ce logement, d'un élément porteur (20, 40) comme lieu d'articulation et comportant en outre un couvercle de serrage (18) pouvant être vissé avec le sabot porteur, le câble porteur pouvant être fixé dans une rainure longitudinale (62) de façon antidérapante entre le couvercle de serrage et le sabot porteur,
caractérisé en ce que
l'élément de liaison (16) est formé d'une matière plastique isolante et le sabot porteur (17) comporte, comme logement, un oeillet de raccordement (33) destiné à la pièce de support (32, 32a) qui traverse le sabot porteur (17) transversalement au câble porteur (10) avec une broche centrale (30).

2. Dispositif de suspension d'au moins un fil de contact (14) conducteur de courant pour des appareils de prise de courant de trolleybus ou de tramways comportant un élément de liaison (52) pouvant être fixé à un câble porteur (10) ou organe de retenue en forme de corde de même type, en particulier un système de serrage, ainsi qu'un organe de préhension (51) isolé par rapport au câble porteur, comportant en particulier des mâchoires de serrage, pour le fil de contact, l'élément de liaison comportant un sabot porteur (56) comprenant un logement pour une pièce de support (32), mobile dans ce logement, d'un élément porteur (20a) comme lieu d'articulation et comportant en outre un couvercle de serrage (54) pouvant être vissé avec le sabot porteur, le câble porteur pouvant être fixé dans une rainure longitudinale (62) de façon antidérapante entre le couvercle de serrage et le sabot porteur, caractérisé en ce que le sabot porteur est une tête de serrage (53) linéaire comportant un arbre libre (56) formé sur cette tête de serrage de façon excentrée dans le sens de la longueur, ayant au moins un oeillet de raccordement (33a) comme logement de la pièce de support (32) de l'élément porteur (20a) ainsi qu'en ce que la tête de serrage est prolongée latéralement par un tronçon de flèche formé comme pièce de serrage pour le câble porteur, parallèlement au câble porteur, en ce que des colliers de serrage (54) peuvent être vissés sur la tête de serrage en tant que couvercle de serrage pour le câble porteur (10) pouvant être serré en position intermédiaire, et en ce que l'élément porteur peut être fixé de façon à pouvoir tourner autour d'un axe transversal (38) ou broche centrale analogue traversant le bras (56) et la pièce de support (32), parallèlement au bras (56), l'élément de liaison (52) étant formé d'une matière plastique isolante.

3. Dispositif de suspension d'au moins un fil de contact (14) conducteur de courant pour des appareils de prise de courant de trolleybus ou de tramways comportant un élément de liaison (16) pouvant être fixé à un câble porteur (10) ou organe de retenue en forme de corde de même type, en particulier un système de serrage, ainsi qu'un organe de préhension (25) isolé par rapport au câble porteur, comportant en particulier des mâchoires de serrage, un système de suspension (12) de type parallélogramme étant installé sur l'élément de liaison du fil de contact et étant constitué d'une paire de cordes de suspension (26) et de deux éléments transversaux (20, 22) de type traverse raccordés par ces cordes, et un des éléments transversaux étant associé à l'organe de préhension, caractérisé en ce que l'élément de liaison (16) présente un sabot porteur (17) comprenant un oeillet de raccordement (33) comme logement d'une pièce de support (32, 32a), pouvant être fixée dans cet oeillet, de l'élément transversal (20, 20a) comme lieu d'articulation et un couvercle de serrage (18, 72) pouvant être vissé avec le sabot porteur (17), le câble porteur (10) pouvant être fixé de façon antidérapante entre le couvercle de serrage et le sabot porteur (17) dans une rainure longitudinale (62, 62d), l'élément de liaison (16) étant formé d'une matière plastique isolante et formant un corps de forme uniforme qui présente l'oeillet de raccordement (33) comme logement de l'élément transversal, pouvant être déplacé par rapport à l'oeillet, de l'organe de préhension (25, 25a, 25b).

4. Dispositif selon la revendication 3, caractérisé en ce que l'élément de liaison (52) est une tête de serrage (53) linéaire avec des colliers de serrage (54) comme couvercle de serrage pour le câble porteur (10) pouvant être serré en position intermédiaire, et en ce qu'un arbre (56) libre, avec au moins un oeillet de raccordement (33a) comme logement de la pièce de support (32) de l'élément porteur (20a), est formé de façon excentrée sur la tête de serrage (53) dans le sens longitudinal, élément porteur qui peut être fixé de façon à pouvoir tourner autour de l'axe transversal (38) ou broche centrale similaire traversant le bras (56) et la pièce de support, parallèlement au bras (56), la tête serrage (53) étant prolongée latéralement, parallèlement au câble porteur, par un tronçon de flèche et le tronçon de flèche étant réalisé comme pièce de serrage du câble porteur.

5. Dispositif selon la revendication 3 ou 4, caractérisé en ce que l'élément transversal proche du câble porteur (10) peut être utilisé comme traverse (20, 20a) avec un organe (32, 32a, 32b) en forme de tourillon dans l'oeillet de raccordement (33, 33a) de l'élément de liaison (16, 52) et peut être fixé par une vis de réglage (38) ou un système de réglage similaire.

6. Dispositif selon l'une des revendications 1 à 5, caractérisé en ce que l'élément de liaison (16, 52) est formé d'un métal enveloppé de matière plastique.

7. Dispositif selon la revendication 1 ou 2, caractérisé par un système de suspension (12, 50) de type parallélogramme constitué d'une paire de cordes de suspension (26) et de deux éléments transversaux (20, 22; 20a, 22a), de type traverse, raccordés par ces cordes, dont un est associé à l'organe de préhension (25; 51), l'élément transversal proche du câble porteur (10) pouvant être utilisé comme traverse (20, 20a) avec un organe (32, 32a, 32b), de type tourillon, dans l'oeillet de raccordement (33, 33a) de l'élément de liaison (16, 52) et être fixé par une vis de réglage (38) ou un dispositif de réglage similaire.

8. Dispositif selon l'une des revendications 3 à 7, caractérisé en ce que la traverse (20, 20a) peut être réglée et ajustée dans son inclinaison par rapport à la partie (17; 53, 56) contenant l'oeillet de raccordement (33a) de l'élément de liaison (16, 52).

9. Dispositif selon l'une des revendications 2 à 8, caractérisé en ce que, sur la tête de serrage (53) ou sur son bras libre (56) ou sur la traverse (20a), une vis d'ajustement (57) repose à distance de l'oeillet de raccordement (33a), vis d'ajustement dont l'extrémité libre coopère avec une butée (58) de l'autre pièce respective (33a, 20a).

10. ispositif selon l'une des revendications 3 à 8, caractérisé en ce que les extrémités libres (21) de la traverse (20a) sont réalisées en forme de crochet pour loger une extrémité (28) respective des cordes de suspension (26).

11. Dispositif selon l'une des revendications 3 à 9, caractérisé en ce que la corde de suspension (26) est composée de matériau isolant et repose, à ses deux extrémités, dans des attaches d'extrémité (28) de forme tubulaire en métal avec tronçon conique, l'attache d'angle comportant un axe d'articulation (28a) en tant qu'organe de liaison.

12. Dispositif selon l'une des revendications 1 à 11, caractérisé en ce que l'évidement (33, 33a) servant d'oeillet de raccordement est formé dans un insert de support (34, 34a) en matériau plus dur par rapport à l'élément de liaison (16, 52), de préférence dans un insert en métal, qui est le cas échéant coulé dans le sabot porteur (17) ou le bras (56) de la tête de serrage (53).

13. Dispositif selon la revendication 12, caractérisé en ce que l'insert de support (34, 34a) présente un tronçon polygonal (35) dans la zone du sabot porteur (17) ou du bras (56) et/ou au moins une rétention, de préférence une entaille en segment (36).

14. Dispositif selon au moins l'une des revendications 1 à 13, caractérisé en ce que l'évidement (33, 33a), disposé transversalement à la direction de suspension (A), de l'insert de support (34, 34a) se rétrécit en cône vers l'intérieur et se transforme en un alésage conique (37) destiné à une vis de réglage (30) ou à un élément similaire, l'évidement (33, 33a) étant le cas échéant ouvert dans la direction de suspension (A) et cette ouverture (59) s'élargissant de préférence en forme de cône vers le bas.

15. Dispositif selon l'une des revendications 5 à 14, caractérisé en ce que l'organe, en forme de tourillon, de la traverse (20, 20a) est un tourillon conique (32) et peut être traversé par la vis de réglage (30), et/ou, en ce qu'il est prévu une traverse (20) avec des bras (19a) à deux coudes dépassant du tourillon conique (32) dans le sens radial, bras qui se terminent par des oreilles en tant qu'oeillets de retenue (19).

16. Dispositif selon la revendication 15, caractérisé en ce que le tourillon conique (32) est une partie d'une pièce porteuse (76) à section en U qui vient saisir en dessous, par un bras, le sabot porteur (17) à peu près au milieu ou en ce que, dans l'ouverture inférieure (59) de l'évidement (33, 33a) un élément de raccordement (74, 75) en forme d'axe peut être introduit et est retenu par la vis de réglage (30) qui traverse de préférence un élément conique (38a).

17. Dispositif selon l'une des revendications 1 à 16, caractérisé en ce que le sabot porteur (17) est, dans la zone de l'insert de support (34a), recouvert d'éléments de liaison, en forme de colliers de fixation, d'un élément de retenue (78) qui porte un harnais de suspension (41a).

18. Dispositif selon la revendication 16 ou 17, caractérisé en ce que la pièce porteuse (76) ou l'élément de raccordement (74, 75) en forme d'axe ou le harnais de suspension (41, 41a) est fixé, bloqué en rotation, avec la vis de réglage (30), le harnais de suspension (41) présentant le cas échéant deux emplacements de serrage (42, 44) pour des fils de contact parallèles (14).

19. Dispositif selon la revendication 17 ou 18, caractérisé en ce que, sur le sabot porteur (17), est prévu un harnais de suspension (41a) pouvant tourner autour d'au moins un axe (A, 79) et qui présente le cas échéant une rail de réglage (80) disposé transversalement au câble porteur (10) et destiné à des systèmes de serrage (25b).

20. Dispositif selon au moins l'une des revendications 1 à 19, caractérisé en ce que le sabot porteur (17) et/ou le support de serrage (52) est/sont réalisé(s) sous la forme d'un corps plat dont la largeur (e) est de préférence inférieure à 50 mm, et/ou en ce que le sabot porteur (17) présente, des deux côtés d'une droite de symétrie (A) qui traverse l'axe de l'évidement (33) conique, des tronçons (60) en forme d'aile qui offrent un côté supérieur (61) pour l'appui sur un câble porteur (10) et en ce qu'un couvercle de serrage (18) peut être vissé sur le côté supérieur.

21. Dispositif selon au moins l'une des revendications 1 à 20, caractérisé en ce que le sabot porteur (17) présente, des deux côtés d'une droite de symétrie (A) qui traverse l'axe de l'évidement (33) conique, des tronçons (60) en forme d'aile offrant un côté supérieur (61) pour un couvercle de serrage (72) qui peut être vissé sur le sabot porteur et qui est muni d'étriers filetés (71) ou d'éléments de fixation similaires pour un tube porteur (70) en forme de corde, le côté supérieur (61) comportant la rainure longitudinale (62) profilée étant le cas échéant courbé vers le bas vers ses arêtes d'extrémité (61a).

22. Dispositif selon au moins l'une des revendications 1 à 20, caractérisé en ce que le sabot porteur (17) présente, des deux côtés d'une droite de symétrie (A) qui traverse l'axe de l'évidement (33) conique, des tronçons (60) en forme d'aile qui offrent un côté supérieur (61) pour l'appui sur une latte isolante (46) en forme de corde, le côté supérieur (61) avec la rainure longitudinale (62) profilée étant le cas échéant courbé vers le bas vers ses arêtes d'extrémité (61a).

23. Dispositif selon la revendication 21 ou 22, caractérisé en ce que le sabot porteur (17) présente des élargissements latéraux (63) comportant des douilles filetées (64a) profilées pour vis de serrage (65) du couvercle de serrage (18, 72) ou de la latte isolante (46), et/ou en ce que au moins le sabot porteur (17) et/ou la tête de serrage (53) est/sont formé(s) d'un polyamide renforcé de fibre de verre.
